# EUROPÄISCHE PATENTSCHRIFT

(11) **EP 1 721 515 B1**
(45) Veröffentlichungstag und Bekanntmachung des Hinweises auf die Patenterteilung: **10.12.2008**
(21) Anmeldenummer: 06113261.9
(22) Anmeldetag: 28.04.2006
(51) Int. Cl.: A01F 15/14

(54) **Bindevorrichtung**
Binding device
Dispositif de liage

(30) Priorität: 13.05.2005 DE 102005022350
(43) Veröffentlichungstag der Anmeldung: 15.11.2006
(73) Patentinhaber: Deere & Company, Moline, IL 61265-8098 (US)
(72) Erfinder: Paillet, Frédéric, 70100, Gray (FR); Gresset, Pascal, 25560, Courvieres (FR); Uros, Raymond, 70100 Gray (FR); Viaud, Jean, 70100 Gray (FR)
(74) Vertreter: Magin, Ludwig Bernhard

(56) Entgegenhaltungen:
- EP-A- 0 815 721
- EP-A- 1 336 334
- DE-U1- 29 905 765
- US-A- 5 012 733

## Beschreibung

Die Erfindung betrifft eine Bindevorrichtung einer Rundballenpresse mit wenigstens einem Bindemittelspender, der mittels einer Antriebsvorrichtung seitlich bewegbar ist und einen Bindemitteltreiber aufweist.

Die EP 815 721 offenbart eine Bindevorrichtung mit zwei Bindemittelspendern, die an einem Trum einer um zwei Umlenkräder geführten Kette befestigt sind, wobei auf der Kette Zahnräder ablaufen, die zwischen sich Bindemittel fördern und in einen Ballenpressraum abgeben.

Das der Erfindung zugrundeliegende Problem wird in der funktionalen und strukturellen Komplexität des Antriebs des Bindemittelspenders und -treibers gesehen.

Dieses Problem ist auf erfinderische Weise mittels der Lehre des Patentanspruchs 1 gelöst worden, wobei von ihm abhängige Patentansprüche vorteilhafte Weiterbildungen der Erfindung umfassen.

Auf diese Weise kann der Bindemittelspender leichter aus der gesamten Bindevorrichtung herausgelöst werden, wenn eine Wartungsmaßnahme dies erfordern sollte, als wenn er zusätzlich mit der Antriebsverbindung für den Bindemitteltreiber verbunden wäre. Anstatt eines können auch mehrere, z.B. zwei oder drei Bindemittelspender vorgesehen werden. Bei dem Bindemittel kann es sich um Garn aus Sisal, Kunststoff oder Papier handeln, es können aber auch Streifen aus Kunststoff oder dergleichen sein.

Bei den Bindemitteltreibern handelt es sich vorzugsweise um profilierte oder nachgiebige Räder, die in gegensinniger Bewegung ein zwischen sich eingeklemmtes Bindemittel fördern. Deren Drehbewegung wird in einfacher Weise aufgrund der eingeleiteten translatorischen Bewegung der Antriebsvorrichtung von der Bewegung des Bindemittelspenders abgeleitet. Dies erfolgt dadurch, dass ein Rad in Eingriff mit einer Kette, einer Zahnstange, einer Reibfläche oder dergleichen in Drehung versetzt wird. Andererseits sind z.B. Freiläufe vorgesehen, die das Bindemittel passieren lassen, wenn ein Rundballen es schneller abzieht als der Bindemitteltr eiber es liefern könnte.

Zwar kann es einerseits vorteilhaft sein, wenn der Bindemitteltreiber das Bindemittel noch fest hält, wenn es bereits von einem sich drehenden Rundballen erfasst wird, da dies die Spannung in dem Bindemittel erhöht. Andererseits wird insbesondere der Start des Bindevorgangs dadurch vereinfacht, dass der Antrieb einen Freilauf aufweist, so dass der Bindemitteltreiber schnell nach Bindestart außer Betrieb gelangt.

Wenn die Antriebsvorrichtung mittels eines Sensors, z.B. eines Schalters, steuerbar ist, kann der Abstand des Bindemittels zur Stirnfläche des Rundballens eingestellt werden, was verhindert, dass der äußere Bindemittelstrang von dem gepressten Rundballen herunterrutscht.

Grundsätzlich ist es möglich, eine Trennvorrichtung unabhängig von der Bindevorrichtung zu betreiben; vorteilhafterweise erfolgt jedoch eine Verbindung zu der Bewegungsbahn des Bindemittelspenders, dessen Bewegung für die Trennung des Bindemittels verwendet werden kann. Die Trennvorrichtung kann aber auch an dem Bindemittelspender selbst vorgesehen sein und mit einer Gegenschneide oder dergleichen zusammenwirken.

Die Ausführung einer Antriebsvorrichtung mit einer von einem Motor betriebenen um zwei Räder geführten Kette oder dergleichen erlaubt eine einfache Anbindung und Mitnahme der Bindemittelspender; grundsätzlich wäre aber auch ein umlaufender Riemen oder dergleichen möglich.

Eine Ausgestaltung des Bindemitteltreibers derart, dass er nicht immer in Antriebsverbindung mit dem Antrieb steht, macht es möglich, den Bindemitteltreiber von äußeren Kräften unbeaufschlagt zu lassen, so dass Bindemittel mit mehr oder weniger Spannung der Presskammer zugeführt werden kann.

In der Zeichnung ist ein einziges Ausführungsbeispiel der Erfindung dargestellt und nachfolgend näher beschrieben.

Es zeigt:
- Figur 1: eine Rundballenpresse in Seitenansicht mit einer erfindungsgemäßen Bindevorrichtung, und
- Figur 2: die Bindevorrichtung in Vorderansicht.

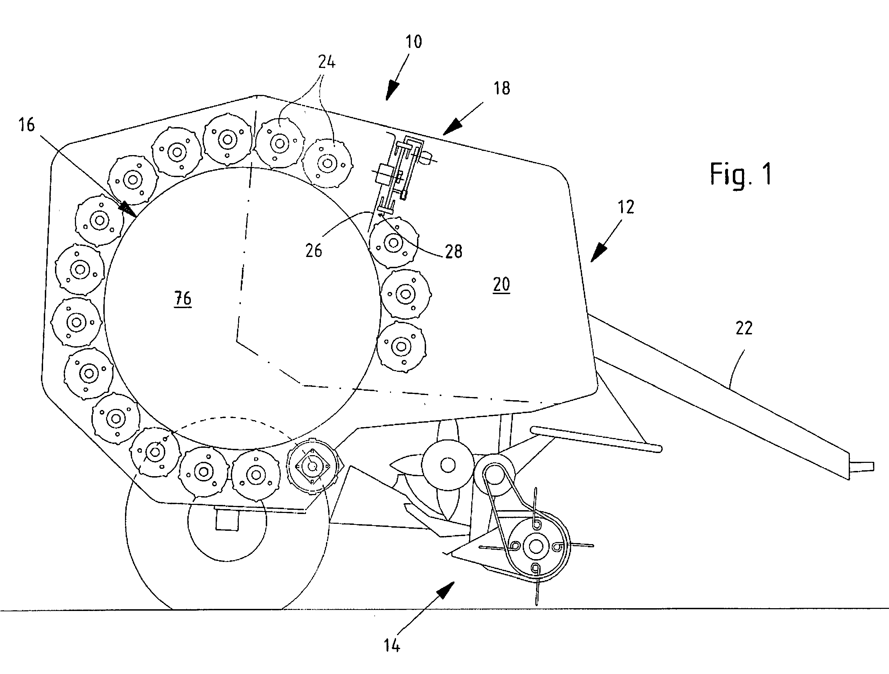

Eine in Figur 1 gezeigte Rundballenpresse 10 weist ein Fahrgestell 12, eine Erntegutzufuhrvorrichtung 14, eine Presskammer 16 und eine Bindevorrichtung 18 auf.

Die Rundballenpresse 10 steht hier stellvertretend für eine Presse, die ein Presserzeugnis liefert, das mit Bindemittel umgeben werden kann. Folglich kann es sich um eine landwirtschaftlich oder industriell einsetzbare Presse handeln, mit der Erntegut, Müll, Papier, Stoff, Baumwolle, Tabak, etc. insbesondere zu rundzylindrischen Ballen geformt werden kann. Die dargestellte Bauweise einer Festkammerpresse ist ebenfalls nur beispielhaft und kann durch eine Rundballenpresse 10 mit einer in der Größe variablen Presskammer 16 oder mit einer gemischten Bauweise ausgebildet sein. Grundsätzlich könnte die Bindevorrichtung 18 überall dort eingesetzt werden, wo es gilt, einen Gegenstand mit einem von einer Rolle abzuziehenden Bindemittel zu umgeben, d.h. auch unabhängig von dem Vorhandensein einer Presse.

Das Fahrgestell 12 weist in nicht näher bezeichneter Weise einen Rahmen und eine Achse mit Rädern auf, an den Seitenwände 20 und eine Deichsel 22 angebracht sind, wie dies herkömmlich vorgenommen wird. Die Deichsel 22 erstreckt sich annähernd horizontal von dem vorderen Endbereich des Fahrgestells 12 zu einem nicht gezeigten Zugfahrzeug.

Die Erntegutzufuhrvorrichtung 14 steht stellvertretend für jegliche Vorrichtung, mit der zu pressendes Gut in die Presskammer 16 gespeist wird. Die Erntegutzufuhrvorrichtung 14 befindet sich unterhalb der Deichsel 22.

Die Presskammer 16 erstreckt sich zwischen den beiden Seitenwänden 20 und wird in diesem Fall von einer Vielzahl auf einem Kreis gelegener Walzen 24 umgeben, die allerdings im vorderen Bereich einen oberen Spalt für die Bindevorrichtung 18 und einen unteren Spalt für die Erntegutzufuhrvorrichtung 14 belassen.

Die Bindevorrichtung 18 wird benutzt, um in die Presskammer 16 Bindemittel 26 in der Form von Garn oder dergleichen einzuführen und um ein Presserzeugnis zu wickeln. Derartige Bindevorrichtungen 18 sind ihrer Art nach bekannt und können an fast beliebigen Stellen der Rundballenpresse 10 angeordnet werden; vorteilhafterweise ist ihre Unterbringung so gewählt, dass eine Bedienungsperson leicht Zugang zu ihr hat. In dem vorliegenden Fall befindet sich die Bindevorrichtung 18 im vorderen Bereich des Fahrgestells 12 oberhalb der Deichsel 22 und ist so ausgebildet, dass sie das Bindemittel 26 durch einen Spalt - den oberen - zwischen zwei Walzen 24 in die Presskammer 16 abgibt. Im Bereich des Spalts befindet sich ebenfalls eine Trennvorrichtung 28, um Bindemittel 26 zu trennen, wie dies an sich bekannt ist. Das Bindemittel 26 ist in Rollen vorrätig gehalten.

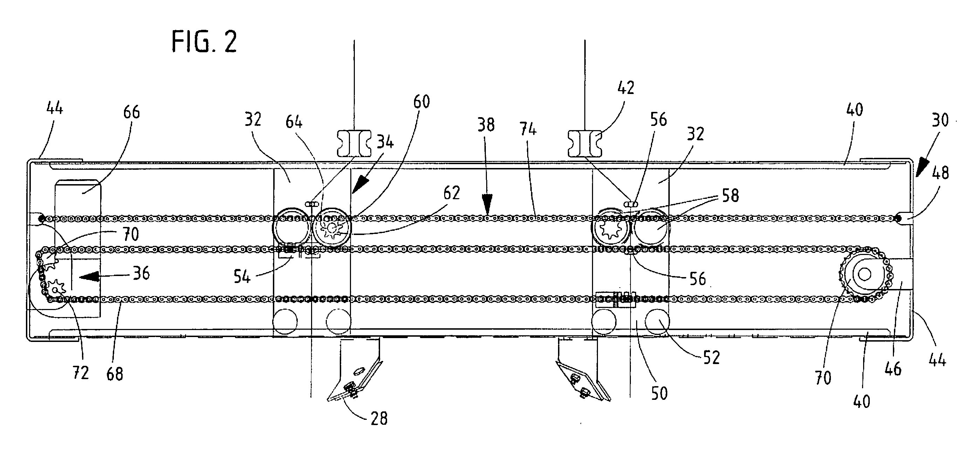

Gemäß Figur 2 weist die Bindevorrichtung 18 einen Rahmen 30, Bindemittelspender 32, Bindemitteltreiber 34, eine Antriebsvorrichtung 36, einen Antrieb 38 und die Trennvorrichtung 28 auf.

Der Rahmen 30 besteht aus gebogenen und miteinander verschweißten Blechteilen, ist in sich fest und wird an den Seitenwänden 20 oder dem Fahrgestell 12 befestigt. An dem Rahmen 30 ist eine obere und eine untere Führung 40 verwirklicht, die z.B. als ein T- oder U-Profil ausgebildet ist, als Gleit- oder Rollenlager ausgebildet ist und dazu dient, die Bindemittelspender 32 quer zur Längsachse der Rundballenpresse 10, d.h. von einer Seitenwand 20 zu der anderen, horizontal zu führen. An die obere Führung 40 sind auf nicht gezeigte Weise Bindemittelführungen 42 angebracht, die aus in vertikaler Richtung durchgängigen Ösen bestehen. An den Innenseiten von senkrechten Wänden 44, die die Führungen 40 miteinander verbinden, sind untere Halter 46 und obere Halter 48 angebracht, die sich zu dem Innenraum des Rahmens 30 hin erstrecken und z.B. wie eine Gabel ausgebildet sein können. Im Bereich der unteren Führung 40 ist zudem die Trennvorrichtung 28 angebracht, die Messer enthält, an denen sich ungefähr in einer mittleren Stellung der Bindemittelspender 32 eine Scherwirkung auf das Bindemittel 26 entfaltet. Die Trennvorrichtung 28 ist hakenförmig ausgebildet und fängt das Bindemittel 26, wenn sich der Bindemittelspender 32 in einer bestimmten Richtung an der Trennvorrichtung 28 vorbeibewegt.

In diesem Ausführungsbeispiel sind zwei Bindemittelspender 32 vorgesehen, was jedoch nicht zwingend ist; diese Bindemittelspender 32 sind gleich ausgebildet, weshalb im Folgenden nur einer beschrieben wird. Jeder Bindemittelspender 32 enthält einen Aufbau 50, z.B. eine Platte, ein Gerüst oder dergleichen, in dessen unterem und oberem Bereich Rollen 52 vorgesehen sind, mit denen sich der Aufbau 50 auf oder in deren Führungen 40 beweglich abstützt. In dem vorliegenden Ausführungsbeispiel sind an der oberen Führung 40 keine Rollen gezeigt; diese sind aber vorteilhafterweise vorgesehen. Der Aufbau 50 ist zudem mit einem Verbinder 54 versehen, dessen Funktion weiter unten erläutert wird. In seiner vertikalen Längsmittenebene sind an den Aufbau 50 weitere Bindemittelführungen 56 angebracht, die der Führung des Bindemittels 26 quer zu der Bewegungsrichtung des Bindemittelspenders 32 und dessen Zufuhr in den Bindemitteltreiber 34 dienen. In der Höhe zwischen den beiden weiteren Bindemittelführungen 56 ist der Bindemitteltreiber 34 vorgesehen, auf den weiter unten eingegangen wird.

Jeder Bindemitteltreiber 34 wird von mindestens zwei miteinander drehenden Rädern 58 gebildet, die entweder kraft- oder formschlüssig stets miteinander in Eingriff bzw. drehender Verbindung stehen, oder aufgrund von zwischen ihnen geführtem Bindemittel 26 gemeinsam gedreht werden. In dem vorliegenden Ausführungsbeispiel sind die Umfangsflächen der Räder 58 gezahnt oder gerippt. Diese Räder 58 befinden sich auf einer Seite des Aufbaus 50 und sind auf einer Welle 60 gehalten, die sich durch den Aufbau 50 horizontal erstreckt und in diesem drehbar ist. Auf einer der Wellen 60 ist auf der gegenüberliegenden Seite ein Antriebsrad 62 vorgesehen. Grundsätzlich bildet also eines der Räder 58 zusammen mit der Welle 60 und dem Antriebsrad 62 eine drehende Einheit. Allerdings ist das Rad 58 oder das Antriebsrad 62 auf der Welle 60 mit einem an sich bekannten Freilauf 64 versehen, so dass dann, wenn das Bindemittel 26 von einem drehenden Rundballen 76 schneller abgezogen wird als der Bindemitteltreiber 34 es liefern kann, die antriebsmäßige Verbindung zwischen dem Rad 58/dem Antriebsrad 62 und der Welle 60 getrennt wird. Der Freilauf 64 wird auch wirksam, wenn der Bindemittelspender 32 in eine Richtung bewegt wird, in der der Bindemitteltreiber 34 das Bindemittel 26 aus der Presskammer 16 herausziehen würde.

Die Antriebsvorrichtung 36 wird in diesem Ausführungsbeispiel von einem Motor 66, einem Zugmittel 68 und Rädern 70 gebildet und von einer nicht gezeigten Steuervorrichtung aktiviert. Der Motor 66 ist ein relativ langsam drehender Elektromotor, der seine Drehbewegung mittels eines Getriebes umlenkt und einen Antrieb in der Form eines Rades 72 bildet. Die Drehzahl des Motors 66 kann sowohl konstant als auch variabel sein. Das Zugmittel 68 ist in einfacher Weise als eine endlose Kette ausgebildet; es könnte ebenso ein Seil oder dergleichen sein. Dieses Zugmittel 68 erstreckt sich nahezu über den gesamten Abstand zwischen den Wänden 44 in einer im Wesentlich senkrechten und quer zur Fahrtrichtung der Rundballenpresse 10 verlaufenden Ebene. Das Zugmittel 68 verläuft sowohl über die Räder 70 als auch über das Rad 72. Das Zugmittel 68 ist zudem über die Verbinder 54 mit den Bindemittelspendern 32 verbunden. Die Räder 70 sind in den unteren Haltern 46 drehbar gelagert und können um Achsen drehen, die sich quer zur Umlaufebene des Zugmittels 68 erstrecken. Die Lage der Räder 70, 72 ist so gewählt, dass die beiden Trume zueinander parallel verlaufen. Die Antriebsvorrichtung 36 wird so gesteuert, dass das Zugmittel 68 in der einen oder der anderen Richtung bewegt wird, wenn ein Verbinder 54 in der einen oder der anderen Richtung in die unmittelbare Nähe eines der Räder 70, 72 gerät.

Der Antrieb 38 enthält nebem dem Antriebsr ad 62 ein Treibglied 74, das in diesem Ausführungsbeispiel ebenfalls aus einer sich zwischen beiden Wänden 44 erstreckenden Kette, die nunmehr fest zwischen die oberen Halter 48 gespannt ist, gebildet wird. Hierzu kann erforderlichenfalls eine Spannvorrichtung vorgesehen werden. Dieses Treibglied 74 ist nicht endlos, sondern besteht aus einem einzigen Trum, das zudem parallel zu dem oberen Trum des Zugmittels 68 verläuft. Anstelle der Ausbildung als Kette könnte auch eine Ausbildung als Zahnstange, als Stange an sich, als Seil und dergleichen vorgesehen sein. Dieser Antrieb 38 ist so ausgebildet, dass er einem Antriebsrad 62, das von der Antriebsvorrichtung 36 seitlich bewegt wird, einen Widerstand bietet, der dazu führt, dass das Antriebsrad 62 in Drehung versetzt wird. Der Antrieb 38 ist so breit, dass zwei Antriebsräder 62 aneinander vorbei gelangen können, oder es sind zwei parallele Antriebe 38 vorgesehen. Nach alledem handelt es sich hier um einen passiven Antrieb 38, der aufgrund einer anderen Bewegung an dem Antriebsrad 62 wirksam wird bzw. entsteht.

Nach alledem ergibt sich folgender Aufbau und folgende Funktion der Bindevorrichtung 18, die vorzugsweise als vorgefertigte Komponente mit den Trennvorrichtungen 28 zwischen die beiden Seitenwände 20 eingefügt wird.

In den Rahmen 30 wird zwischen dessen obere Halter 48 der Antrieb 38 gespannt, die Räder 70 werden in die unteren Halter 46 drehbar eingebaut, der Motor 66 wird an den unteren Halter 46 angeschraubt und das Zugmittel 68 wird über die Räder 70 und das Rad 72 geführt, geschlossen und gespannt. Anschließend werden die vormontierten, d.h. mit den Rollen 52, Antriebsrädern 62, Wellen 60, Rädern 58 und Bindemittelführungen 56 versehenen, Bindemittelspendern 32 in die beiden Führungen 40 eingesetzt. Dann werden die Bindemittelspender 32 mittels der Verbinder 54 an das obere bzw. das untere Trum des Zugmittels 68 angeschlossen. Schließlich wird Bindemittel 26 durch die Bindemittelführungen 42 heran- und in den Spalt zwischen den beiden Rädern 58 und durch die weiteren Bindemittelführungen 56 geführt. Nunmehr ist die Bindevorrichtung 18 einsatzbereit. Die Bindemittelspender 32 sind abgesehen von der Lage des Verbinders 54 identisch ausgebildet, werden aber spiegelbildlich zueinander in die Führungen 40 eingesetzt, so dass sie sich auf beiden Seiten des Zugmittels 68 befinden und aneinander vorbei gelangen können. Im montieren Zustand befinden sich die Räder 58 jeweils außen und die Antriebsräder 62 jeweils innen, gesehen von einer durch das Zugmittel 68 verlaufenden Ebene.

Die Montage der Bindemittelspender 32 an dem Zugmittel 68 ist so gewählt, dass sich beide Bindemittelspender 32 von einer Mittenachse zwischen den beiden Wänden 44 symmetrisch nach außen und innen bewegen und beim Bindeende vorzugsweise an der Mittenachse zum Halt kommen, wo das Bindemittel 26 zwischen den beiden Trennvorrichtungen 28 abgeschert oder abgeschnitten wird.

## Patentansprüche

1. Bindevorrichtung (18) einer Rundballenpresse (10) mit wenigstens einem Bindemittelspender (32), der mittels einer Antriebsvorrichtung (36) seitlich bewegbar ist und einen Bindemitteltreiber (34) aufweist, **dadurch gekennzeichnet, dass** die Antriebsvorrichtung (36) ein Zugmittel (68) für die seitliche Bewegung enthält und dass ein Antrieb (38) zur Förderung von Bindemittel (26) durch den Bindemitteltreiber (34) vorgesehen ist, der hierzu ein Treibglied (74) enthält, das von dem Zugmittel (68) getrennt ausgebildet ist und mit diesem in Wirkverbindung steht.

2. Bindevorrichtung nach Anspruch 1, **dadurch gekennzeichnet, dass** der Antrieb 3 8 ein insbesondere s als Zugmittel und/oder Zahnstange und/oder Stange mit einem Reibbelag ausgebildetes Treibglied (74) und ein mit diesem in Wirkverbindung stehendes Antriebsrad (62) aufweist.

3. Bindevorrichtung nach einem oder mehreren der vorherigen Ansprüche, **dadurch gekennzeichnet, dass** der Antrieb (38) einen Freilauf (64) aufweist.

4. Bindevorrichtung nach einem oder mehreren der vorherigen Ansprüche, **dadurch gekennzeichnet, dass** die Antriebsvorrichtung (36) mittels eines Sensors steuerbar ist.

5. Bindevorrichtung nach einem oder mehreren der vorherigen Ansprüche, **gekennzeichnet durch** eine Trennvorrichtung (28), die in dem Bewegungsbereich des Bindemittelspenders (32) angeordnet ist.

6. Bindevorrichtung nach einem oder mehreren der vorherigen Ansprüche, **dadurch gekennzeichnet, dass** die Antriebsvorrichtung (36) ein von einem Motor (66) betriebenes um zwei Räder (70) geführtes Zugmittel (68) aufweist.

7. Bindevorrichtung nach einem oder mehreren der vorherigen Ansprüche, **dadurch gekennzeichnet, dass** der Antrieb (38) von dem Bindemitteltreiber (34) trennbar ist.

## Claims

1. Binding device (18) of a round baler (10), with at least one binding material dispenser (32) which is movable laterally by means of a driving device (36) and has a binding material driver (34), **characterized in that** the driving device (36) contains tractive means (68) for the lateral movement, and **in that** a drive (38) for conveying binding material (26) through the binding material driver (34) is provided, said drive, for this purpose, containing a driving element (74) which is designed separately from the tractive means (68) and is operatively connected thereto.

2. Binding device according to Claim 1, **characterized in that** the drive (38) has a driving element (74) designed in particular as a tractive means and/or a rack and/or a rod with a friction coating, and a driving wheel (62) operatively connected to said driving element.

3. Binding device according to one or more of the preceding claims, **characterized in that** the drive (38) has a free wheel (64).

4. Binding device according to one or more of the preceding claims, **characterized in that** the driving device (36) can be controlled by means of a sensor.

5. Binding device according to one or more of the preceding claims, **characterized by** a separating device (28) which is arranged in the region of movement of the binding material dispenser (32).

6. Binding device according to one or more of the preceding claims, **characterized in that** the driving device (36) has a tractive means (68) which is operated by a motor (66) and is guided around two wheels (70).

7. Binding device according to one or more of the preceding claims, **characterized in that** the drive (38) can be separated from the binding material driver (34).

## Revendications

1. Dispositif de liage (18) d'une ramasseuse-presse à balles cylindriques (10) avec au moins un distributeur de moyen de liage (32), qui est mobile latéralement au moyen d'un dispositif d'entraînement (36) et qui comprend un entraîneur de moyen de liage (34), **caractérisé en ce que** le dispositif d'entraînement (36) comprend un moyen de traction (68) pour le mouvement latéral et **en ce qu'**il est prévu un entraînement (38) pour le transport de moyen de liage (26) au moyen de l'entraîneur de moyen de liage (34), qui comprend à cet effet un élément d'entraînement (74) qui est réalisé séparément du moyen de traction (68) et qui est en liaison active avec celui-ci.

2. Dispositif de liage selon la revendication 1, **caractérisé en ce que** l'entraînement (38) comprend un élément d'entraînement (74) réalisé en particulier sous la forme d'un moyen de traction et/ou d'une crémaillère et/ou d'une barre avec un revêtement de friction, et une roue d'entraînement (62) se trouvant en liaison active avec celui-ci.

3. Dispositif de liage selon une ou plusieurs des revendications précédentes, **caractérisé en ce que** l'entraînement (38) comprend une roue libre (64).

4. Dispositif de liage selon une ou plusieurs des revendications précédentes, **caractérisé en ce que** le dispositif d'entraînement (36) peut être commandé au moyen d'un capteur.

5. Dispositif de liage selon une ou plusieurs des revendications précédentes, **caractérisé par** un dispositif de coupe (28), qui est disposé dans la région de mouvement du distributeur de moyen de liage (32).

6. Dispositif de liage selon une ou plusieurs des revendications précédentes, **caractérisé en ce que** le dispositif d'entraînement (36) comprend un moyen de traction (68) guidé autour de deux roues (70) et entraîné par un moteur (66).

7. Dispositif selon une ou plusieurs des revendications précédentes, **caractérisé en ce que** l'entraînement (38) peut être séparé de l'entraîneur de moyen de liage (34).
